**Europäisches Patentamt**

**European Patent Office**

**Office européen des brevets**

(19)

(11) Numéro de publication: **0 037 346**
**B1**

(12) **FASCICULE DE BREVET EUROPEEN**

(45) Date de publication du fascicule du brevet: **10.10.84**

(51) Int. Cl.³: **C 03 C 3/24,** C 03 C 3/04, C 03 C 1/00

(21) Numéro de dépôt: **81400527.8**

(22) Date de dépôt: **02.04.81**

(54) **Verres de couleur jaune-vert absorbant les rayonnements ultra-violets, procédé de fabrication de ces verres, et applications à la fabrication de récipients.**

(30) Priorité: **02.04.80 FR 8007422**

(43) Date de publication de la demande:
**07.10.81 Bulletin 81/40**

(45) Mention de la délivrance du brevet:
**10.10.84 Bulletin 84/41**

(84) Etats contractants désignés:
**AT BE CH DE GB IT LI LU NL SE**

(56) Documents cités:
**FR-A-1 275 824**
**FR-A-2 325 614**
**FR-A-2 400 492**

**THE GLASS INDUSTRY; vol. 47, mai 1966, R.C. KNUPP et al.: "Effects of iron in ultraviolet absorbing green glass", pages 252-256**

(73) Titulaire: **SAINT-GOBAIN EMBALLAGE**
**2 place de la Libération**
**F-92306 Levallois-Perret (FR)**

(72) Inventeur: **Berthet, Bernard Gustave Julien**
**10 Avenue du Bel Air**
**F-78150 Le Chesnay (FR)**

(74) Mandataire: **Eudes, Marcel et al**
**Saint-Gobain Recherche 39 Quai Lucien Lefranc**
**F-93304 Aubervilliers Cedex (FR)**

Courier Press, Leamington Spa, England.

Description

La présente invention intéresse les verres colorés absorbant les rayonnements du domaine de l'ultra-violet et des plus faibles longueurs d'onde du spectre visible. Ces verres sont d'un grand intérêt pour la fabrication de récipients destinés à l'emballage et la protection de produits susceptibles de se dégrader lorsqu'ils sont exposés à de tels rayonnements. S'agissant par exemple de la protection des produits alimentaires ou pharmaceutiques, il est admis couramment qu'il est souhaitable, pour l'assurer de manière satisfaisante, que la paroi du récipient présente un facteur de transmission monochromatique inférieur à 5%, ou même à 2%, pour les longueurs d'onde inférieures à 450 nm.

Selon l'un des aspects de l'invention, celle-ci a pour objet des verres absorbant ces rayonnements nocifs et présentant des teintes se situant entre le vert et le jaune, et correspondant à des longueurs d'onde dominantes comprises entre 565 et 578, et plus spécialement entre 568 et 575 nm, cette association de propriétés étant particulièrement recherchée par les producteurs de certains vins de grande qualité, dont le vieillissement, qui demande généralement plusieurs années et exige beaucoup de soins et de précautions, ne doit évidemment pas être compromis lors de leur commercialisation.

A côté des exigences des utilisateurs relatives à la couleur des récipients et à la protection contre la dégradation par les rayonnements, il est bien évident que doivent aussi être satisfaites par les verres visés par l'invention des sujétions concernant les diverses étapes de la fabrication, et notamment l'élaboration du matériau vitreux et sa mise en forme. A cet égard, son homogénéité, son affinage et sa transmission dans l'infra-rouge, notamment, doivent être tels qu'ils ne compromettent pas les rendements de fabrication.

Dans l'industrie du verre creux, ces rendements atteignent généralement sans difficultés majeures des niveaux satisfaisants lorsque le facteur de transmission monochromatique présente, entre 750 et 2000 nm une valeur moyenne supérieure à 10%, ou de préférence à 15%, sous 5 mm d'épaisseur. Il est noté au passage que, sauf mention particulière, c'est à cette même épaisseur de 5 mm que correspondent toutes les grandeurs colorimétriques indiquées dans la présente description et que leurs valeurs sont déterminées par les méthodes normalisées par la C.I.E. (Commission Internationale de l'Eclairage) et pour l'illuminant C.

Au titre de l'état de la technique, on rappelle que, pour obtenir une bonne absorption des rayonnements ultra-violets, il est bien connu de recourir à des verres dans lesquels une notable partie du chrome contenu est amené à l'état hexavalent.

Le document FR—A—1,275,824, par exemple, décrit la fabrication de tels verres désignés sous la dénomination, très explicite, de verres "Ultrasorb", qui exigent pour leur élaboration un milieu fortement oxydant, obtenu par l'emploi de matières premières oxydantes telles que des chromates, des bichromates et/ou des nitrates, et d'une atmosphère oxydante. Il prévoit même, pour maîtriser la longueur d'onde dominante, qui se situe dans le domaine de 554 à 565 nm, et, à cet effet, l'état de valence du chrome, d'injecter de l'oxygène par bulle à bulle dans le bain en fusion lui-même.

Il a été proposé également, par le document FR—A—2 400 492, d'élaborer de tels verres au chrome hexavalent en faisant appel à un laitier spécialement préparé, contenant des sulfures, cette introduction étant compensée par une augmentation appropriée des teneurs en agents oxydants.

Même à l'aide de ces divers artifices, l'élaboration des verres au chrome hexavalent demeure délicate, du fait de leur affinage en milieu oxydant, et par conséquent leur coût de fabrication est relativement élevé.

En outre, leur couleur se situe dans le domaine des verts crus, correspondant à des longueurs d'onde dominantes sensiblement inférieures à celles que vise l'invention.

Un autre moyen d'obtention de l'absorption des rayonnements ultra-violets consiste à faire appel à la famille des verres jaunes dits "ambres aux sulfures", élaborés en milieu réducteur, qui sont notamment utilisés très couramment pour la fabrication de bouteilles pour la bière et le lait. Ces verres ambre sont d'ailleurs décrits aussi par les deux documents précédemment cités, pour comparaison aux verres au $Cr^{6+}$. Malheureusement, jusqu'à la présente invention, on ne savait abaisser en deçà de 576—578 nm la longueur d'onde dominante des verres de ce type, tout en conservant leurs performances d'absorption des ultra-violets, que par le recours à des agents colorants coûteux, dont l'emploi grevait notablement le prix des produits finis. Un tel inconvénient handicape, par exemple, les procédés proposant des ajouts d'oxyde de cobalt à la composition des verres "ambre", en vue d'obtenir des teintes vertes de nuances très diverses, telles que le vert "champagne" et d'autres verts très foncés, par mélange de la couleur ambre avec le bleu de l'oxyde de cobalt.

Lors de la recherche d'agents colorants moins coûteux que l'oxyde de cobalt menée pour abaisser la longueur d'onde dominante des verres "ambre aux sulfures", l'oxyde de chrome a été tout particulièrement étudié, afin de tenter de tirer profit de la coloration verte caractéristique de l'ion $Cr^{3+}$. On peut retenir, des publications existantes en ce domaine, les conclusions d'une communication de S. de LAJARTE en janvier 1957, aux 10° Journées Techniques de l'Union Scientifique Continentale du Verre, tenues à BRUXELLES, communication ayant pour titre: "Influence de l'oxyde de chrome sur la coloration des verres ambres aux sulfures". Selon l'auteur, l'introduction d'oxyde de chrome dans les veres "ambre" — c'est à dire contenant du soufre, et fondus en milieu réducteur pour développer les centres colorés sulfurés, de nature d'ailleurs contestée, qui apportent les propriétés d'absorption des ultra-violets — provoque très rapidement la destruction de ces centres colorés, l'apparition de la transparence au dessous de 500 nm puis, au delà de certaines concentrations en oxyde de chrome, elle rend impossible l'obtention d'un verre homogène et convenablement affiné.

Pratiquement, dans un verre de base contenant, en % pondéraux, 72% de $SiO_2$, 15% de $Na_2O$, 12% de CaO et 1% de $Al_2O_3$ pour des teneurs en fer de 0,02 à 0,05% de $Fe_2O_3$, l'auteur n'avait pu dépasser des teneurs en chrome de l'ordre de 0,05% exprimées en $Cr_2O_3$, sans qu'apparaissent. les inconvénients cités plus haut.

On peut considérer comme confirmant et complétant les observations de cette publication déjà ancienne, les données relatives à certains verres colorés contenant à la fois fer et chrome, qui sont fabriqués actuellement de manière très courante à l'échelle industrielle, et dont le verre "feuille morte réduit" constitue un exemple typique. Ces verres, grâce à des teneurs en fer variant de 0,05 à 0,15% de $Fe_2O_3$ et en chrome variant de 0,02 à 0,05% de $Cr_2O_3$, couvrent la gamme des longueurs d'onde dominantes visées par l'invention, mais, bien qu'élaborées en conditions réductrices et quoique contenant des sulfures, ils présentent des transmissions dans le domaine des rayonnements ultra-violets, de l'ordre de 30%, qui ne leur permettent pas d'assurer la protection que vise la présente invention, par suite d'une insuffisance de leur teneur en éléments chromophores sulfurés.

Pour remédier à cet inconvénient, et afin, en particulier, de compenser l'effet oxydant de l'oxyde de chrome vis à vis de ces éléments sulfurés, on a tenté d'utiliser les moyens usuels de maîtrise de l'état d'oxydo-réduction du verre, tels que les ajouts d'éléments réducteurs, éventuellement de sulfures, dans le mélange vitrifiable, ou le réglage de la combustion du mélange combustible introduit dans le four. Contre toute attente, aucune amélioration significative n'a été constatée par la mise en oeuvre de ces divers moyens. Certains peuvent même entraîner une aggravation des inconvénients cités.

En revanche, il a été constaté, et ceci constitue l'observation suprenante sur laquelle se fonde la présente invention, qu'il est possible d'obtenir des verres présentants les propriétés désirées, à la fois d'absorption des ultra-violets et de longueur d'onde dominante, à partir de compositions pour verre du type "ambre aux sulfures", lorsqu'on compense l'introduction de chrome par des teneurs accrues en fer, en faisant appel pour ces deux éléments à des teneurs dépassant sensiblement celles des verres connus les plus proches, qui sont, selon le point de comparaison adopté, les verres du type "feuille morte réduit", certains verres jaunes du type "ambre aux sulfures", ou encore des verres de ce même type, de coloration modifiée par des ajouts de cobalt. Plus précisément, par rapport aux verres du type "feuille morte réduit", les verres de l'invention se caractérisent, quant à la composition, par des teneurs plus élevées en fer, chrome et soufre sous forme de sulfures, et quant aux propriétés, par un facteur de transmission lumineuse Y bien inférieur, une pureté d'excitation $p_e$ supérieure et surtout par une absorption des ultra-violets bien supérieure.

Si, au contraire, on se réfère aux verres jaunes du type "ambre aux sulfures", contenant éventuellement en outre du cobalt, les verres de l'invention s'en distinguent, au regard de la composition, par des teneurs en fer et en chrome supérieures; quant aux propriétés des verres de l'invention, on verra plus loin, notamment à l'occasion des exemples, comment elles évoluent en relation avec les teneurs revendiquées en éléments colorants.

La présente invention a donc pour objet de nouveaux verres colorés, de base silico-sodocalcique usuelle, c'est à dire contenant, à titre d'oxydes principaux, de 68 à 74% de $SiO_2$, de 0 à 5% de $Al_2O_3$, de 6 à 15% de CaO, de 0 à 6% de MgO, de 11 à 15% de $Na_2O$ et de 0 à 5% de $K_2O$, qui comportent à titre d'éléments colorants du fer, du chrome, des sulfures, et éventuellement du cobalt, et présentent une très faible transmission des rayonnements ultra-violets, résultant d'une teneur appropriée en complexes chromophores sulfurés de fer et de métaux alcalins du type de ceux des verres dits "ambre aux sulfures" ces verres contenant lesdits éléments colorants dans les teneurs pondérales suivantes:

0,18 à 0,40% de fer exprimé sous forme de $Fe_2O_3$,

0,08 à 0,20% de chrome exprimé sous forme de $Cr_2O_3$,

0,01 à 0,04% de sulfures exprimés sous former de S, et

0 à 0,015% de cobalt exprimé sous forme de CoO

et possédant une longueur d'onde dominante $\lambda_D$ comprise entre 565 et 578 nm, mesurée pour l'illuminant C et sous 5 mm d'épaisseur.

Un autre aspect de l'invention est de fournir des verres présentant, dans les mêmes conditions de mesure, un facteur de transmission monochromatique supérieur à 10%, en moyenne, pour les longueurs d'onde comprise entre 750 et 2000 nm, et inférieur à 5% pour les longueurs d'onde inférieurs à 450 nm.

Selon un autre aspect de l'invention, des verres présentant un facteur de transmission monochromatique inférieur à 2% au dessous de 450 nm sont obtenus à l'aide de teneurs pondérales en fer et chrome telles que le rapport $Fe_2O_3/Cr_2O_3$ présente une valeur minimale, cette valeur évoluant d'ailleurs légèrement en fonction du niveau des teneurs en $Cr_2O_3$, entre 2,2 pour les plus faibles teneurs en $Cr_2O_3$ du domaine considéré et 1,8 pour les plus fortes teneurs.

Selon un autre aspect de l'invention, des verres de performances élevées d'absorption des ultra-violets s'obtiennent à l'aide de teneurs en sulfures d'autant plus proches de leur limite inférieure que les teneurs en fer et en chrome se rapprochent de leurs limites supérieures. Ainsi par exemple, pour les verres présentant une transmission inférieure à 2% pour les longueurs d'onde inférieures à 480 nm, la teneur minimale en sulfures semble de 0,03% pondéraux de S pour les faibles teneurs en $Cr_2O_3$, et seulement de 0,01% pour les plus fortes teneurs.

Dans le cadre de l'invention, comme déjà indiqué plus haut, est prévue la présence éventuelle, dans la composition du verre, en complément du fer et du chrome, de faibles quantités d'oxyde de cobalt, cet élément présentant un minimum de transmission dans le domaine de longueur d'onde proche de 600 nm, en vue de faciliter l'ajustement de la longueur d'onde dominante $\lambda_D$, et surtout celui du facteur de transmission lumineuse Y. Cependant, cet ajoute peut entraîner un abaissement indésirable de la pureté d'excitation $p_e$. Cet effet a conduit à prendre en considération, outre la limite de 0,015% donnée plus haut pour la teneur en CoO, la valeur du rapport pondéral $Cr_2O_3/CoO$. Celle-ci, pour obtenir des puretés d'excitation au moins égales à 80%, atteindra de préférence au moins 10.

Enfin, ayant constaté, lors de l'étude de l'incidence de la substitution de cobalt au chrome, que la longueur d'onde dominante peut être maintenue sensiblement constante lorsqu'on échange environ 1 unité de masse de CoO contre 4 unités de $Cr_2O_3$, il est apparu souhaitable que la somme $Cr_2O_3 + 4$ CoO exprimée en teneurs pondérales soit maintenue inférieure à 0,20%.

D'autre part, pour obtenir une transmission dans l'infra-rouge de valeur moyenne supérieure à environ 15%, ou conservera avantageusement une teneur en $Cr_2O_3$ telle que le rapport pondéral $Fe_2O_3/Cr_2O_3$ ne dépasse pas 3,5.

La présente invention a également pour objet le procédé de fabrication des verres colorés décrit précédemment.

Pour la préparation du mélange vitrifiable, il est avantageux pour apporter le chrome de faire appel à la chromite de fer, matière première relativement peu coûteuse, dans laquelle le chrome se trouve faiblement oxydé, et qui en outre participe à l'introduction du fer

Une partie au moins des sulfures sera avantageusement apportée directement à l'état de sulfures dans le mélange vitrifiable, sous la forme de laitier de haut fourneau, cette matière première présentant d'ailleurs, particulièrement dans les fusions réductrices, d'importants avantages lors de l'élaboration du verre, et notamment de son affinage, permettant de sensibles économies sur le coût de fabrication. Les mélanges vitrifiables à base de laitier peuvent en outre utilement, dans le cadre de l'invention, contenir aussi des sulfates, pour faciliter l'ajustement de la teneur en sulfures.

D'autre part, il peut être avantageux, pour réaliser une partie au moins de l'apport en sulfures, de prévoir l'introduction combinée dans la charge de charbon et de sulfates, ces deux types d'agents se présentant avantageusement en mélange intime, et, mieux encore, sous forme granulée.

L'élaboration du verre peut être conduite de manière très analogue à celle des verres ambre, c'est-à-dire que, le mélange vitrifiable comportant une teneur appropriée en éléments réducteurs, l'atmosphère du four peut être légèrement oxydante, permettant un bon rendement calorifique du combustible utilisé.

On notera en outre que les essais indiquent, ainsi qu'on y a fait allusion plus haut, que l'introduction d'une quantité donnée de laitier apparaît d'autant plus efficace du point de vue de la qualité de l'affinage du verre que ce dernier présente des teneurs plus élevées en fer et en chrome, une plus grande proportion des sulfures apportées pouvant être utilisée pour cette étape de l'élaboration.

L'invention a enfin pour objet, à titre d'application des verres colorés décrits ci-dessus, des récipients pour produits alimentaires ou pharmaceutiques et en particulier des bouteilles pour vins de qualité, ces bouteilles présentant une teinte se situant dans la gamme intermédiaire entre vert et jaune, et correspondant de préférence à une longueur d'onde dominante comprise entre 568 et 575 nm. Ces récipients assurent une excellente protection contre les rayonnements ultraviolets.

—

## Exemples

Pour illustrer, de manière non limitative, la présente invention, on décrira maintenant, par leurs procédés de fabrication, leurs compositions et leurs principales propriétés, un certain nombre de verres conformes à l'invention, et, aux fins de comparaison, on présentera certaines données concernant deux verres voisins, un verre jaune de type "ambre aux sulfures", et un verre de type "feuille morte réduit".

Le tableau I est relatif à des mélanges vitrifiables selon l'invention, et le tableau II indique la composition théorique des verres correspondants, tandis que le tableau III présente, pour l'ensemble des verres présentés par les tableaux I et II et desdits verres voisins, les teneurs en éléments colorants déterminées par l'analyse, et, en regard, les propriétés de transmission tirées des courbes de transmission.

Le laitier de haut fourneau utilisé contient, en % pondéraux, $SiO_2$: 32,8 — $Fe_2O_3$ — $Al_2O_3$: 16,1 — MnO: 0.58 — CaO: 42,5 — MgO : 4,7 — $Na_2O$: 0.45 — $K_2O$: 0,80 — $Cr_2O_3$: 0,003 — $TiO_2$: 0,62 — SrO: 0,09 — $P_2O_5$: 0,20 — $V_2O_5$: 0,059 — F: 0,27 —, les sulfates, exprimées en $SO_3$ présentant une teneur inférieure à 0,1% et les sulfures, exprimées en S, étant présents à raison de 1,04%.

Dans le tableau I, les poids des matières premières sont exprimées en kg pour 100 kg de verre à obtenir, tandis que dans le tableau II la composition théorique des verres visés est donnée en % pondéraux d'oxydes. Notons qu'il a paru avantageux d'effectuer un prémélange des matières apportant $Fe_2O_3$, $Cr_2O_3$ et CoO avec la dolomie, avant le mélange aux autres matières. Comme on le voit d'après ces deux tableaux, la comparaison entre ces différents verres, dont la matrice vitreuse est la même pour tous, porte essentiellement sur l'influence des teneurs en fer, en chrome et en cobalt, et sur celle de la quantité de laitier introduite dans le mélange vitrifiable, et par conséquent celle de la teneur du mélange vitrifiable en sulfures.

La fusion des six mélanges du tableau I a été conduite sous conditions d'atmosphère légèrement oxydantes (1% d'excès d'oxygène), sauf celle du verre n° 1, élaboré en conditions plutôt réductrices (1% de CO résiduel). Il convient d'en tenir compte lors de l'interprétation du tableau III, et notamment de l'écart observé sur la teneur en "soufre total" de ce verre par rapport aux autres verres.

Le tableau III présente, ou rappelle, pour les différents verres examinés (colonne I), la teneur en laitier du mélange vitrifiable (colonne II), et donne les teneurs en fer (colonne III), soufre total (colonne V) et soufre à l'état de sulfure (colonne VI) déterminées par analyse, tandis que la teneur en chrome indiquée colonne IV correspond à la valeur théorique résultant de l'analyse des matières premières du mélange vitrifiable.

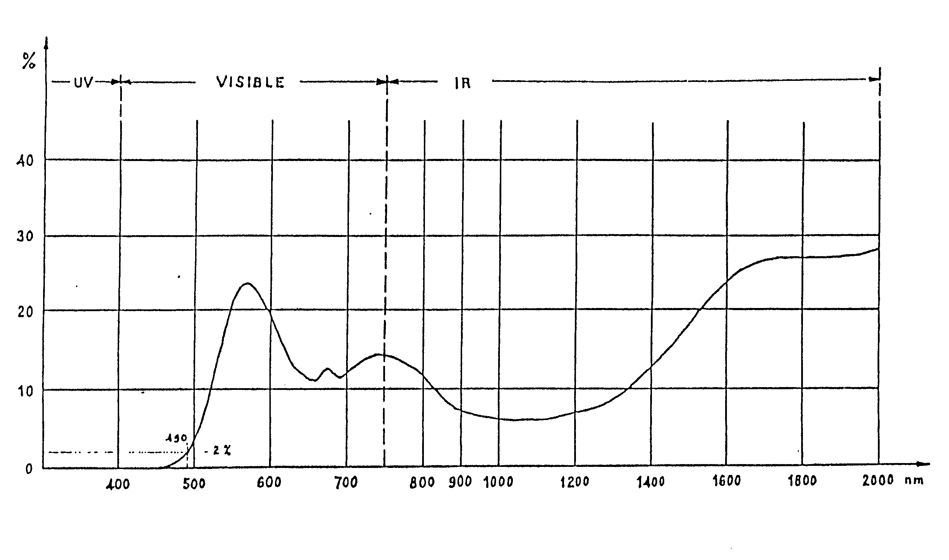

Dans la colonne VII, il a paru intéressant de donner, aux fins de comparaison des verres étudiés, une mesure de l'efficacité de la protection contre les rayonnements ultra-violets qui corresponde à ce qu'on pourrait appeler la "limite de coupure" des faibles longueurs d'ondes: on a choisi d'adopter la valeur de la longueur d'onde pour laquelle le coefficient de transmission monochromatique s'abaisse au dessous de 2%. La courbe de transmission du verre n° 5 est donnée à la figure unique annexée à la présente demande pour illustrer la méthode utilisée pour déterminer la valeur de ladite limite de coupure.

Les colonnes suivantes du tableau III contiennent quelques autres grandeurs caractéristiques déterminées à l'aide de la courbe de transmission de chacun des verres: la longueur d'onde dominante $\lambda_D$, exprimée en nm dans la colonne VIII, le facteur de transmission lumineuse Y, exprimé en % dans la colonne IX, la pureté d'excitation $p_e$, exprimée en % dans la colonne X, la transmission moyenne $T_m^{IR}$ entre 750 et 2000 nm exprimée en % dans la colonne XI, et la valeur maximale de la transmission monochromatique $t_M^{UV}$ dans le domaine ultra-violet, qu'on admettra limité supérieurement à 400 nm, exprimée en % dans la colonne XII.

Les grandeurs colorimétriques portées dans le tableau III, comme celles figurant dans l'ensemble de la description correspondent à une épaisseur de verre de 5 mm et à l'illuminant C, et sont déterminées selon les méthodes normalisées par la Commission Internationale de l'Eclairage (C.I.E.).

L'examen du tableau III permet de confirmer l'essentiel des observations formulées dans la description. On constate notamment que des teneurs en chrome dépassant largement les teneurs en usage, par exemple, dans les verres ambre, sous réserve qu'elles soient accompagnées d'une augmentation appropriée de la teneur en fer, restent compatibles avec l'obtention d'excellentes propriétés de protection contre les ultra-violets, tout en permettant un abaissement substantiel de la longueur d'onde dominante $\lambda_D$. En outre, on vérifie, par exemple en comparant les verres 5 et 7, que cette augmentation combinée des teneurs en fer et en chrome peut être avantageusement complétée d'une réduction très importante de la teneur en sulfures lorsqu'on souhaite faire évoluer la longueur d'onde dominante tout en maîtrisant la réduction du facteur de transmission lumineuse Y. A cet égard, on constate aussi en comparant les verres 1 et 3, ou les verres 2 et 4, que le teneur en sulfures constitue un moyen très efficace d'action sur Y, alors qu'elle ne joue que très faiblement sur les autres propriétés colorimétriques, dès lors qu'elle atteint un niveau de l'ordre de 0,015% de S, suffisant pour assurer une très bonne protection contre les ultra-violets lorsque les autres colorants se présentent dans les limites de teneurs revendiquées.

On peut remarquer également que, les autres paramètres demeurant inchangés, l'augmentation de la teneur en fer, rendue nécessaire par celle de la teneur en chrome, contrarie l'influence visée pour cette dernière sur la longueur d'onde dominante, et qu'il est donc souhaitable de la limiter, d'autant plus qu'elle risque d'entraîner rapidement un abaissement excessif du facteur de transmission lumineuse Y.

Le verre n° 6 est donné à titre d'exemple de verre selon l'invention contenant du cobalt. On remarque que ce verre, avec un facteur de transmission lumineuse Y très voisin de ceux des verres 2, 3 et 5 présente une pureté d'excitation $p_e$ nettement plus faible et une protection contre les ultra-violets sensiblement moins efficace, bien que compatibles avec les objectifs visés par l'invention.

On notera également que l'influence du réglage de l'atmosphère du four est relativement secondaire par rapport à celle de la quantité de laitier contenue dans la charge vitrifiable, à l'égard de la teneur finale du verre en sulfure; par contre, la teneur globale en soufre, exprimée en $SO_3$ se trouve sensiblement plus faible en conditions réductrices qu'en conditions oxydantes.

La présente description et plus particulièrement certains exemples mettent en évidence que, sous un autre aspect de l'invention, celle-ci fournit des verres dont les propriétés ne s'étaient pas jusqu'à présent trouvées réunies, à savoir, pour une épaisseur de 5 mm et pour l'illuminant C, une longueur d'onde dominante comprise entre 570 et 575 nm, un facteur de transmission monochromatique inférieur à 2% pour les longueurs d'onde inférieures à 480 nm et supérieur en moyenne à 15% pour les longueurs d'onde comprises entre 750 et 2000 nm, un facteur de transmission lumineuse compris entre 15 et 20% et une pureté d'excitation supérieure à 90%.

TABLEAU I

MELANGES VITRIFIABLES (kg/100 kg de verre)

| Matières premières \ Verres | 1 | 2 | 3 | 4 | 5 | 6 |
|---|---|---|---|---|---|---|
| Laitier | 4,000 | 4,000 | 6,000 | 6,000 | 4,000 | 6,220 |
| Phonolithe | 4,939 | 4,939 | 4,786 | 4,786 | 4,939 | 0,213 |
| Dolomie | 10,915 | 10,915 | 10,347 | 10,347 | 10,915 | 8,557 |
| Calcaire | 6,177 | 6,177 | 4,995 | 4,995 | 6,177 | 8,770 |
| Sable | 67,309 | 67,309 | 66,733 | 66,733 | 67,304 | 70,158 |
| Carbonate de sodium | 22,958 | 22,958 | 22,961 | 22,961 | 22,958 | 23,840 |
| Chromite de fer | 0,2294 | 0,2294 | 0,2294 | 0,2294 | 0,3670 | 0,1935 |
| Oxyde de fer | 0,0016 | 0,0823 | 0,0025 | 0,0823 | 0,0445 | 0 |
| Oxyde de cobalt | 0 | 0 | 0 | 0 | 0 | 0,0165 |

0 037 346

TABLEAU II

COMPOSITION THEORIQUE DES VERRES (% EN POIDS)

| Oxydes apportés<br>Verres | $SiO_2$ | $Fe_2O_3$ | $Al_2O_3$ | CaO | MgO | $Na_2O$ | $K_2O$ | $Cr_2O_3$ | CoO | Total |
|---|---|---|---|---|---|---|---|---|---|---|
| 1 | 71,18 | 0,24 | 2,15 | 9,25 | 2,00 | 13,55 | 0,75 | 0,10 | 0 | 99,22 |
| 2 | 71,18 | 0,32 | 2,15 | 9,25 | 2,00 | 13,55 | 0,75 | 0,10 | 0 | 99,30 |
| 3 | 71,18 | 0,24 | 2,15 | 9,25 | 2,00 | 13,55 | 0,75 | 0,10 | 0 | 99,22 |
| 4 | 71,18 | 0,32 | 2,15 | 9,25 | 2,00 | 13,55 | 0,75 | 0,10 | 0 | 99,30 |
| 5 | 71,18 | 0,32 | 2,15 | 9,25 | 2,00 | 13,55 | 0,75 | 0,16 | 0 | 99,36 |
| 6 | 71,78 | 0,18 | 1,40 | 10,24 | 2,03 | 13,88 | 0,09 | 0,08 | 0,014 | 99,694 |

## TABLEAU III

### ELEMENTS COLORANTS ET PROPRIETES

| I<br>Verres | II<br>Laitier<br>(%) | III<br>$Fe_2O_3$<br>total<br>(%) | IV<br>$Cr_2O_3$<br>total<br>(%) | V<br>Soufre<br>total<br>($SO_3$%) | VI<br>Soufre<br>sulfure<br>(S%) | VII<br>Limite<br>coupure<br>(nm) | VIII<br>$\lambda_D$<br>(nm) | IX<br>$\gamma$<br>(%) | X<br>Pe<br>(%) | XI<br>$T_m^{IR}$<br>(%) | XII<br>$t_M^{UV}$<br>(%) |
|---|---|---|---|---|---|---|---|---|---|---|---|
| 1 | 4 | 0,25 | 0,10 | 0,045 | 0,013 | 475 | 575 | 23,3 | 93,2 | 20 | 1 |
| 2 | 4 | 0,34 | 0,10 | 0,060 | 0,015 | 490 | 577 | 17,1 | 95,8 | 16 | 0,5 |
| 3 | 6 | 0,26 | 0,10 | 0,080 | 0,027 | 480 | 574 | 18,2 | 92,2 | 18 | 0,5 |
| 4 | 6 | 0,34 | 0,10 | 0,080 | 0,024 | 505 | 577 | 9,2 | 97 | 14 | 0,5 |
| 5 | 4 | 0,33 | 0,16 | 0,070 | 0,014 | 490 | 572 | 16,1 | 95,2 | 15 | 0,5 |
| 6 | 6,22 | 0,18 | 0,08 | 0,047 | 0,01 | 450 | 568 | 17,3 | 73,0 | 32 | 2 |
| 7 | 7 | 0,15 | (CoO : 0,014)<br>0,06 | 0,09 | 0,036 | 500 | 580 | 20 | 95 | 30 | 0,5 |
| 8 | 4 | 0,14 | 0,03 | 0,04 | 0,006 | ... | 573 | 59,1 | 54,4 | 55 | 22 |

0 037 346

## Revendications

1. Verre coloré réduit, de matrice silico-sodo-calcique usuelle, c'est-à-dire contenant à titre de constituants principaux 68 à 74% de SiO₂ — 0 à 5% de Al₂O₃ — 6 à 15% de CaO — 0 à 6% de MgO — 11 à 15% de Na₂O et 0 à 5% de K₂O, qui comporte à titre d'éléments colorants du fer, du chrome, éventuellement du cobalt, et en outre, grâce à des conditions réductrices d'élaboration, des sulfures en quantités suffiantes pour provoquer la très forte absorption des rayonnements ultra-violets typique des complexes chromophores sulfurés de fer et de métaux alcalins des verres réduits dits "ambre aux sulfures", caractérisé en ce qu'il contient lesdits éléments colorants dans les teneurs pondérales suivantes:

0,18 à 0,40% de fer exprimé sous forme de Fe₂O₃

0,08 à 0,20% de chrome exprimé sous forme de Cr₂O₃

0,01 à 0,04% de sulfures exprimées sous forme de S et

0 à 0,015% de cobalt exprimé sous forme de CoO,

et qu'il possède, sous 5 mm d'épaisseur et pour l'illuminant C une longueur d'onde dominante comprise entre 565 et 578 nm.

2. Verre coloré selon la revendication 1, caractérisé par un facteur de transmission monochromatique inférieur à 5% pour les longueurs d'onde inférieures à 450 nm.

3. Verre coloré selon l'une des revendication précédentes, caractérisé par un facteur de transmission monochromatique supérieur en moyenne à 10% pour les longueurs d'onde comprises entre 750 et 2000 nm.

4. Verre coloré selon l'une des revendications précédentes, caractérisé par un facteur de transmission lumineuse compris entre 10 et 25%.

5. Verre coloré selon l'une au moins des revendications précédentes, caractérisé par un rapport pondéral Fe₂O₃/Cr₂O₃ supérieur à une valeur minimale évoluant de 2,2 pour les plus faibles teneurs du domaine revendiqué pour la teneur en Cr₂O₃ jusqu'à 1,8 pour les plus fortes.

6. Verre coloré selon la revendication 5, caractérisé par un facteur de transmission monochromatique inférieur à 2% pour les longueurs d'onde inférieures à 450 nm.

7. Verre selon l'une des revendications 5 et 6, caractérisé par une teneur minimale en sulfures dont la valeur varie en sens inverse de la teneur en Cr₂O₃, depuis 0,03% de S pour les plus faibles teneurs jusqu'à 0,01% pour les plus fortes et par un facteur de transmission monochromatique inférieur à 2% pour les longueurs d'onde inférieures à 480 nm.

8. Verre coloré selon l'une des revendications précédentes, caractérisé en ce que le rapport pondéral Cr₂O₃/CoO est au moins égal à 10.

9. Verre coloré selon la revendication 8, caractérisé par une pureté d'excitation au moins égale à 80%.

10. Verre coloré selon l'une des revendications précédentes, caractérisé en ce que la somme Cr₂O₃ + 4 CoO, exprimée en teneurs pondérales, est inférieure à 0,20%.

11. Verre coloré selon l'une des revendications précédentes, caractérisé en ce que le rapport pondéral Fe₂O₃/Cr₂O₃ est un plus égal à 3,5.

12. Verre coloré selon la revendication 11, caractérisé par un facteur de transmission monochromatique supérieur en moyenne à 15% entre 750 et 2000 nm.

13. Verre coloré selon la revendication 1, caractérisé par une longueur d'onde dominante comprise entre 570 et 575 nm, un facteur de transmission monochromatique inférieur à 2% pour les longueurs d'onde inférieures à 480 nm, et supérieur en moyenne à 15% pour les longueurs d'onde comprises entre 750 et 2000 nm, un facteur de transmission lumineuse compris entre 15 et 20% et une pureté d'excitation supérieure à 90%.

14. Procédé de fabrication d'un verre coloré selon l'une des revendications précédentes, caractérisé en ce qu'il est principalement fait appel à un composé de chrome faiblement oxydé, tel que la chromite de fer, pour apporter le chrome et au moins une partie du fer, au mélange vitrifiable.

15. Procédé de fabrication d'un verre coloré selon l'une des revendications 1 à 13, caractérisé en ce que une partie au moins des sulfures est apportée au mélange vitrifiable sous forme de laitier de haut fourneau.

16. Procédé selon la revendication 15, caractérisé par l'addition d'un sulfate métallique au laitier de haut fourneau introduit dans la charge.

17. Procédé de fabrication d'un verre coloré selon l'une des revendications 1 à 13, caractérisé en ce que une partie au moins de l'apport en sulfures à la charge vitrifiable est réalisée par l'intermédiaire d'un mélange intime de sulfate métallique et d'un composé carboné, de préférence sous forme agglomérée.

18. Procédé selon l'une des revendications 14 à 17, caractérisé en ce que l'atmosphère surmontant le bain de fusion du verre est réglée à un taux d'oxygène de l'ordre de 1%.

19. Application d'un verre coloré selon l'une des revendications 1 à 13 à la fabrication de récipients pour produits alimentaires ou pharmaceutiques.

## Claims

1. A reduced coloured glass, having a conventional silico-soda-calcia matrix, that is containing principal constituents 68 to 74% of SiO₂, 0 to 5% of Al₂O₃, 6 to 15% of CaO, 0 to 6% of MgO, 11 to 15% of Na₂O and 0 to 5% of K₂O, which comprises as colouring agents iron, chromium and optionally cobalt and, owing to reducing conditions used in manufacture, sulphides in sufficient quantities to cause strong absorption of ultra-violet radiation typical of sulphide chromophore complexes of iron and alkali metals in reduced glasses called "sulphide amber", characterised in that it contains said colouring elements in the following quantities by weight:

0.18 to 0.40% of iron measured as $Fe_2O_3$

0.08 to 0.20% of chromium measured as $Cr_2O_3$

0.01 to 0.04% of sulphides expressed as S, and

0 to 0.015% of cobalt expressed as CoO, and in that it has, at 5 mm thickness and for illuminant C a dominant wavelength from 565 to 578 nm.

2. Coloured glass according to Claim 1, characterised by a monochromatic transmission factor less than 5% for wavelengths less than 450 nm.

3. Coloured glass according to one of the preceding claims, characterised by a mean monochromatic transmission factor greater than 10% for wavelengths from 750 to 2000 nm.

4. Coloured glass according to one of the preceding claims, characterised by a luminous transmission factor from 10 to 25%.

5. Coloured glass according to at least one of the preceding claims, characterised by a $Fe_2O_3/Cr_2O_3$ weight ration greater than a minimum value which varies from 2.2 for small contents in the range of $Cr_2O_3$ content claimed to 1.8 for higher contents.

6. Coloured glass according to claim 5, characterised by a monochromatic transmission factor less than 2% for wavelengths less than 450 nm.

7. Glass according to one of claims 5 and 6, characterised by a minimum content of sulphides of which the value varies inversely to the content of $Cr_2O_3$, from 0.03% of S for small contents to 0.01% for higher contents and by a monochromatic transmission factor less than 2% for wavelengths less than 480 nm.

8. Coloured glass according to one of the preceding claims, characterised in that the $Cr_2O_3/CoO$ weight ratio is at least 10.

9. Coloured glass according to claim 8, characterised by an excitation purity of at least 80%.

10. Coloured glass according to one of the preceding claims, characterised in that the sum of $Cr_2O_3 + 4$ CoO, expressed as content by weight, is less than 0.20%.

11. Coloured glass according to one of the preceding claims, characterised in that the weight ratio $Fe_2O_3/Cr_2O_3$ does not exceed 3.5.

12. Coloured glass according to claim 11, characterised by a mean monochromatic transmission factor greater than 15% from 750 to 2000 nm.

13. Coloured glass according to claim 1, characterised by a dominant wavelength from 570 to 575 nm, a monochromatic transmission factor less than 2% for wavelengths less than 480 nm, and greater on average than 15% for wavelengths from 750 to 2000 nm, a luminous transmission factor from 15 to 20% and an excitation purity greater than 90%.

14. Method of making a coloured glass according to one of the preceding claims, characterised in that it principally uses a chromium compound of low oxidation state, such as iron chromite, to supply the chromium and at least part of the iron, in the vitrifiable mixture.

15. Method of making a coloured glass according to one of claims 1 to 13, characterised in that at least part of the sulphides is supplied to the vitrifiable mixture in the form of blast furnace slag.

16. Method according to claim 15, characterised by the addition of a metal sulphate to the blast furnace slag introduced into the charge.

17. Method of making a coloured glass according to one of claims 1 to 13, characterised in that at least part of the sulphur added to the vitrifiable charge is formed by means of an intimate mixture of metal sulphate and a carbon compound, preferbly an agglomerate thereof.

18. Method according to one of claims 14 to 17, characterised in that the atmosphere above the fusion bath of the glass is adjusted to an oxygen content of the order of 1%.

19. Application of a coloured glass according to one of claims 1 to 13 to manufacture of receptacles for food or pharmaceutical products.

**Patentansprüche**

1. Reduziertes farbiges Natron-Kalk-Silikat-Glas mit den Hauptbestandteilen

68 bis 74% $SiO_2$

0 bis 5% $Al_2O_3$

6 bis 15% CaO

0 bis 6% MgO

11 bis 15% $Na_2O$ und

0 bis 5% $K_2O$,

das als färbende Elemente Eisen, Chrom, gegebenenfalls Kobalt und außerdem infolge reduzierender Schmelzbedingungen Sulfide in ausreichender Menge enthält, um eine sehr starke Absorption ultravioletter Strahlung hervorzurufen, die typisch für färbende Sulfid-Komplexe von Eisen und von Alkalimetallen reduzierter Gläser, sogenannter "Sulfidbernstein-Gläser", ist, dadurch gekennzeichnet, daß es die genannten färbenden Elemente in folgenden Gewichtsanteilen enthält

0,18 bis 0,40% Eisen, berechnet als $Fe_2O_3$,

0,08 bis 0,20% Chrom, berechnete als $Cr_2O_3$,

0,01 bis 0,04% Sulfide, berechnet als S, und

0 bis 0,015% Kobalt, berechnet als CoO

und daß es bei einer Dicke von 5 mm und für eine C-Lichtquelle eine dominierende Wellenlänge zwischen 565 und 578 nm aufweist.

2. Farbiges Glas nach Anspruch 1, gekennzeichnet durch einen monochromatischen Durchlässigkeitskoeffizienten von kleiner als 5% für Wellenlängen unter 450 nm.

3. Farbiges Glas nach einem der vorhergehenden Ansprüche, gekennzeichnet durch einen monochromatischen Durchlässigkeitskoeffizienten von im Mittel größer als 10% für Wellenlängen zwischen 750 und 2000 nm.

4. Farbiges Glas nach einem der vorhergehenden Ansprüche, gekennzeichnet durch einen Lichtdurchlässigkeitsfaktor zwischen 10 und 25%.

5. Farbiges Glas nach wenigstens einem der vorhergehenden Ansprüche, gekennzeichnet durch ein Gewichtsverhältnis $Fe_2O_3/Cr_2O_3$ oberhalb eines Mindestwertes von 2,2 für die niedrigsten Gehalte der für den Gehalt an $Cr_2O_3$ beanspruchten Bereiche bis 1,8 für die höchsten Gehalte.

6. Farbiges Glas nach Anspruch 5, gekennzeichnet durch einen monochromatischen Durchlässigkeitsfaktor von kleiner als 2% für Wellenlängen unter 450 nm.

7. Glas nach einem der Ansprüche 5 und 6, gekennzeichnet durch einen Mindestgehalt an Sulfiden, dessen Wert in umgekehrtem Sinn zum Gehalt an $Cr_2O_3$ von 0,03% S für die niedrigsten Werte bis 0,01 für die höchsten Werte schwankt, und durch einen monochromatischen Durchlässigkeitsfaktor von kleiner als 2% für Wellenlängen unter 480 nm.

8. Farbiges Glas nach einem der vorhergehenden Ansprüche, dadurch gekennzeichnet, daß das Gewichtsverhältnis von $Cr_2O_3/CoO$ wenigstens gleich 10 ist.

9. Farbiges Glas nach Anspruch 8, gekennzeichnet durch einen spektralen Farbanteil von wenigstens gleich 80%.

10. Farbiges Glas nach einem der vorhergehenden Ansprüche, dadurch gekennzeichnet, daß die Summe $Cr_2O_3 + 4$ CoO, ausgedrückt in Gewichtsanteilen, unter 0,20% liegt.

11. Farbiges Glas nach einem der vorhergehenden Ansprüche, dadurch gekennzeichnet, daß das Gewichtsverhältnis $Fe_2O_3/Cr_2O_3$ höchstens gleich 3,5 ist.

12. Farbiges Glas nach Anspruch 11, gekennzeichnet durch einen monochromatischen Durchlässigkeitsfaktor von im Durchschnitt größer als 15% zwischen 750 und 2000 nm.

13. Farbiges Glas nach Anspruch 1, gekennzeichnet durch eine dominierende Wellenlänge zwischen 570 und 575 nm, einen monochromatischen Durchlässigkeitsfaktor von kleiner als 2% für Wellenlängen unter 480 nm und im Mittel größer als 15% für Wellenlängen zwischen 750 und 2000 nm, einen Lichtdurchlässigkeitsfaktor zwischen 15 und 20% und einen spektralen Farbanteil von über 90%.

14. Verfahren zur Herstellung eines farbigen Glases nach einem der vorhergehenden Ansprüche, dadurch gekennzeichnet, daß zum Einbringen des Chroms und wenigstens eines Teiles des Eisens in das verglasbare Gemenge hauptsächlich eine niedrig oxidierte Chromverbindung, wie Eisenchromit, verwendet wird.

15. Verfahren zur Herstellung eines farbigen Glases nach einem der Ansprüche 1 bis 13, dadurch gekennzeichnet, daß wenigstens ein Teil der Sulfide in das verglasbare Gemenge in Form von Hochofenschlacke eingebracht wird.

16. Verfahren nach Anspruch 15, gekennzeichnet durch den in die Charge eingeführten Zusatz eines Metallsulfats von Hochofenschlacke.

17. Verfahren zur Herstellung eines farbigen Glases nach einem der Ansprüche 1 bis 13, dadurch gekennzeichnet, daß wenigstens ein Teil des Eintrags an Sulfiden in das verglasbare Gemenge mittels eines innigen Gemischs aus Metallsulfat und einer kohlenstoffhaltigen Verbindung vorzugsweise in Form eines Agglomerates erfolgt.

18. Verfahren nach einem der Ansprüche 14 bis 17, dadurch gekennzeichnet, daß die Atmosphäre über dem Glasschmelzbad auf einen Sauerstoffgehalt in der Größenordnung von 1% geregelt wird.

19. Anwendung eines farbigen Glases nach einem der Ansprüche 1 bis 13 zur Herstellung von Behältern für Nahrungsmittel oder pharmazeutische Produkte.

0037 346